# EUROPEAN PATENT APPLICATION

(11) **EP 4 556 757 A2**
(43) Date of publication of application: **21.05.2025**
(21) Application number: 24212428.7
(22) Date of filing: 12.11.2024
(51) Int. Cl.: F16H 48/40

(54) **A CARRIER**

(30) Priority: 15.11.2023 CZ 20230445
(71) Applicant: TATRA TRUCKS a.s., 742 21 Kopnvnice (CZ)
(72) Inventor: Smolka, Radomir, Pribor (CZ); Poncik, Jakub, Hovezi (CZ); Koliba, Petr, Koprivnice (CZ); Piskor, Martin, Koprivnice (CZ)
(74) Representative: Kendereski, Dusan

(57) **Abstract**

The present invention relates to a carrier (11) for a housing (3) of an inter-axle differential (2), a housing (3) of an inter-axle differential (2) and an inter-axle differential (2) comprising the carrier (11) and the housing (3). The carrier (11) is ring-shaped, comprises an inner circumference and an outer circumference, wherein along the inner circumference, the carrier (11) comprises an inner spur gearing (15) for engaging a geared portion of the input shaft (9). Along the outer circumference, the carrier (11) comprises three non-geared surfaces (16) spaced apart and three geared surfaces (18) of an outer spur gearing for fixedly engaging a housing (3), the three geared surfaces (18) being spaced apart such that a geared surface (18) is arranged between each of the two non-geared surfaces (16). The housing (3) of the inter-axle differential (2) is cylindricallyshaped, comprises: a first base (19) having an opening (20) for the input shaft and a second output shaft; a second base (21) having an opening for a first output shaft; and three connecting bridges (23) linking the two bases (19, 21) to form three clearances (24) between the two bases (19, 21) for holding pins and planet gears (4) arranged thereon for engaging a geared portion of the two output shafts. Each connecting bridge (23) comprises a geared surface on the side facing a longitudinal axis of the cylindrical shape for fixed connection with the geared surface (18) of the outer spur gearing of the carrier (11).

## Description

### Field of technology

The present invention relates to an inter-axle differential, in particular to its carrier and housing.

### Prior art

A UK patent application GB 1298871 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The individual axle differentials are connected to the respective inter-axle differential by coupling shafts, wherein a coupling shaft connecting the inter-axle differential to the axle differential of the axle closer to the centre of the chassis (i.e. the second front axle or the first rear axle) is hollow, and a coupling shaft connecting the inter-axle differential to the intermediate differential between the two axles is guided in its cavity. The construction details of the individual differentials are not shown.

A UK patent application GB 1153911 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The axle differentials are connected to the respective inter-axle differential by coupling shafts. The inter-axle differential is further connected via a reduction gear and a crankshaft to an intermediate differential between the two axle pairs. The construction details of the individual differentials are not shown.

A US patent application US 2020269686 A1 schematically describes an arrangement of differentials in a chassis with four axles (first and second front axles and first and second rear axles). There is an inter-axle differential for the front axles, an inter-axle differential for the rear axles, an axle differential for the second front axle and an axle differential for the first rear axle arranged between the second front axle and the first rear axle. An axle differential for the first front axle is arranged between the first front axle and the second front axle, and an axle differential for the second rear axle is arranged between the first rear axle and the second rear axle. A disadvantage of this arrangement is the unused space between the front and rear axles, respectively, and the unnecessary space taken up by the inter-axle differentials between the second front and first rear axle.

A US patent application US 2004048713 A1 describes construction details of a different type of an inter-axle differential, comprising a three-arm spur gear carrier.

A US patent application US 2017122422 A1 describes construction details of a different type of inter-axle differential having four pairs of pinions arranged in a cylindrical housing. Torque from the input shaft is distributed between the output shaft and a gear driven by said pairs of pinions.

In the publication of Frýba, 2018, titled "Tatra 813, historie, takticko-technicka data, modifikace" (translated as "Tatra 813, history, tactical-technical data, modifications"), page 68 describes the construction of a front and rear chassis part of the Tatra 813 type, having an inter-axle differential arranged between two axle differentials in the space between the two front axles, or two rear axles, respectively. The torque vectors in the output shafts are directed in opposite directions. The axle differential itself comprises a carrier and a housing, wherein the carrier only comprises an internal spur gear for engaging a geared portion of an input shaft. Torque is transmitted from the carrier to the housing via a carrier lever connected to the housing by a fitted bolt. A disadvantage of such a bolted connection is the complexity of the fitting and a resulting unsatisfactory performance.

Construction details of other differentials are described in US patent applications US 2013047779 A1, US 2022402360 A1 and US 2022290750 A1, and in a UK patent application GB 2237851 A.

A US patent application US 2018209527 A1 describes a car chassis in a 6x6 and 4x4 all-wheel drive configuration. This chassis comprises a friction clutch at an axle differential of each axle to allow physical disengagement of a drive shaft. Tapered wheel differentials are used.

A US patent application US 2004079562 A1 describes an inter-axle differential and an axle differential, always preceded by an input, as part of a final drive housing. Both the inter-axle differential and the axle differential are designed with tapered wheels. The axle differential is part of a semi-axle.

In the prior art, there is therefore a need for an interaxial differential, in particular its sleeve and housing, allowing torque vectors in output shafts to be directed in opposite directions.

### Summary of the invention

It is an object of the invention to provide an inter-axle differential, in particular its carrier and housing, allowing the inter-axle differential to be positioned between two axle differentials of each axle. This is due to the direction of a torque vector in a first output shaft being in the opposite direction to the direction of a torque vector in a second output shaft.

In the first aspect, said objective is achieved by an inter-axle differential carrier, wherein the carrier is ring-shaped, comprises an inner circumference and an outer circumference, and along the inner circumference, it comprises an inner spur gearing for engaging a geared portion of the input shaft. Along the outer circumference, the carrier comprises three non-geared surfaces spaced apart and three geared surfaces of an outer spur gearing for fixedly engaging a housing, the three geared surfaces being spaced apart such that a geared surface is arranged between each of the two non-geared surfaces

Thus, there is no continuous outer spur gearing along the outer circumference, but only part of the area along the outer circumference of the carrier is used for the fixed connection to the carrier housing. This allows the planet gears to be placed on the pins in the housing in the clearance not taken up by the outer spur gearing (see below) so that these planet gears can be engaged with the geared portions of both output shafts (or equivalently with the geared central wheels of both output shafts) facing away from each other along the same longitudinal axis. As a result, the two axle differentials of the front or rear axles and the inter-axle differential can be placed in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three non-geared surfaces and three geared surfaces is due to strength and fitting considerations, as a carrier with more than three non-geared surfaces and three geared surfaces would have too large a diameter to be built into the central tube of the chassis.

Preferably, each geared surface of the outer spur gearing is arranged on a radially extending arm, which provides better dimensional sizing of the carrier-housing pair.

In the second aspect, said objective is achieved by a cylindrically shaped inter-axle differential housing, comprising: a first base having an opening for the input shaft and a second output shaft; a second base having an opening for a first output shaft; and three connecting bridges linking the two bases to form three clearances between the two bases for holding pins and planet gears arranged thereon for engaging a geared portion of the two output shafts. Each connecting bridge comprises a geared surface on the side facing a longitudinal axis of the cylindrical shape (i. e. on its inner side) for fixed connection with the geared surface of the outer spur gearing of the carrier (see above).

The housing therefore does not need to have a complete cylindrical shell between the bases for a solid connection to the carrier, only the part of the shell that comes into contact with the geared surfaces of the outer spur gearing of the carrier is sufficient. This allows the planet gears to be arranged on pins in the housing in the clearance not occupied by the outer spur gearing of the carrier (see above) so that these planet gears can be in engagement with the geared portions of both output shafts (or equivalently with the geared central wheels of both output shafts) extending away from each other along the same longitudinal axis. As a result, the two axle differentials of the front or rear axles and the inter-axle differential can be arranged in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three connecting bridges is due to strength and fitting considerations, as a housing with more than three connecting bridges would be too large in diameter to be built into the chassis central tube.

The carrier and the housing therefore relate to two interrelated elements of the inter-axle differential.

In the third aspect, said objective is achieved by an inter-axle differential comprising the above-described carrier for engaging a geared portion of an input shaft; the above-described housing fixedly connected to the carrier; and six pins mounted on the housing. One planet gear is arranged on each pin for engaging the geared portion of the first or second output shaft such that one half of the number of planet gears is in engagement with the geared portion of the first output shaft and the remaining half of the number of planet gears is in engagement with the geared portion of the second output shaft extending in the opposite direction from the first output shaft. As a result, it is possible to direct torque vectors to the output shafts in opposite directions.

The advantage of the above-described inter-axle differential is the change in direction of the output torque vector from the inter-axle differential to the axle differential. In this way, it is possible to concentrate the differentials in an axle differential - inter-axle differential - axle differential configuration in a coupling part of a driven axle pair, thereby achieving a more compact chassis.

### Brief description of drawings

Figure 1 shows an arrangement of an inter-axle differential according to the prior art in an 8X8 chassis between the second front axle and the first rear axle.
Figure 2 shows an arrangement of an inter-axle differential according to the present invention in an 8X8 chassis between the first front axle and the second front axle.
Figure 3 shows an arrangement of an inter-axle differential according to the prior art in a 6X6 chassis between the front axle and the first rear axle.
Figure 4 shows an arrangement of an inter-axle differential according to the present invention in a 6X6 chassis between the first rear axle and the second rear axle.
Figure 5 schematically shows an inter-axle differential according to the prior art in a side sectional view.
Figure 6 schematically shows an inter-axle differential according to the present invention in a side sectional view.
Figure 7 shows a cross-sectional view of the inter-axle differential carrier and housing according to the prior art.
Figure 8 shows a cross-sectional view of the inter-axle differential carrier and housing according to the present invention.
Figure 9 shows a longitudinal section of the inter-axle differential carrier and housing according to the prior art.
Figure 10 shows a longitudinal section of the inter-axle differential carrier and housing according to the present invention.

### Examples

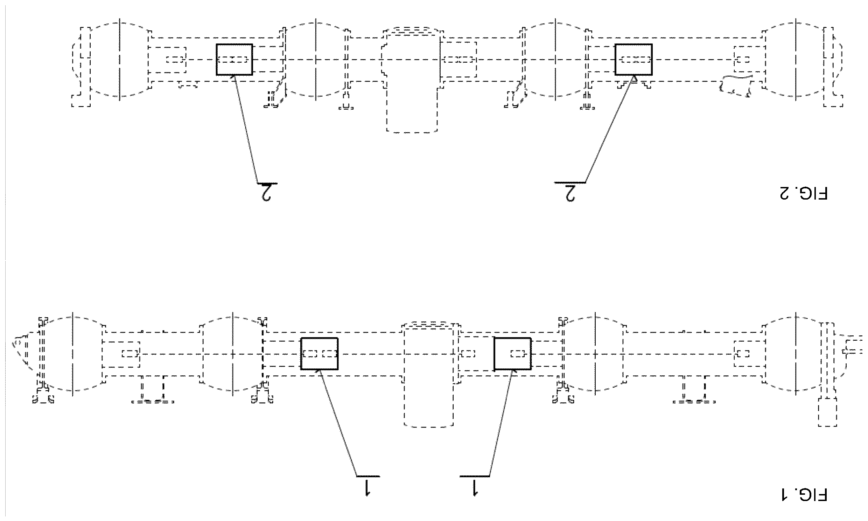

Figure 2 shows an arrangement of an inter-axle differential 2 according to the present invention in an 8X8 chassis between the first front axle and the second front axle. Analogously, the inter-axle differential 2 according to the present invention is also arranged between the first rear axle and the second rear axle.

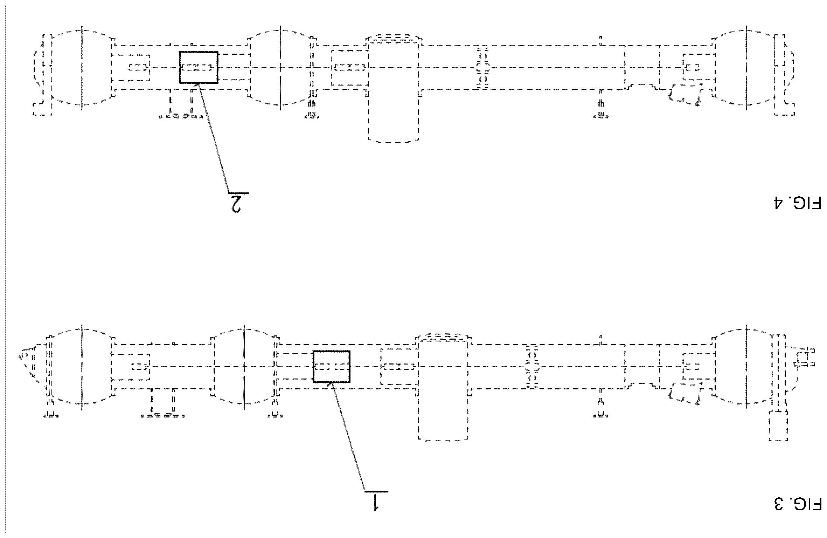

Figure 4 shows an arrangement of an inter-axle differential 2 according to the present invention in a 6X6 chassis between the first rear axle and the second rear axle. By analogy, the inter-axle differential 2 according to the present invention may be arranged in another 6X6 chassis between the first front axle and the second front axle.

For comparison, Figures 1 and 3 show an arrangement of an inter-axle differential 1 according to the prior art in an 8X8 chassis between the second front and first rear axle (Figure 1) and in a 6X6 chassis between the front and first rear axle (Figure 3), respectively.

### Example 1

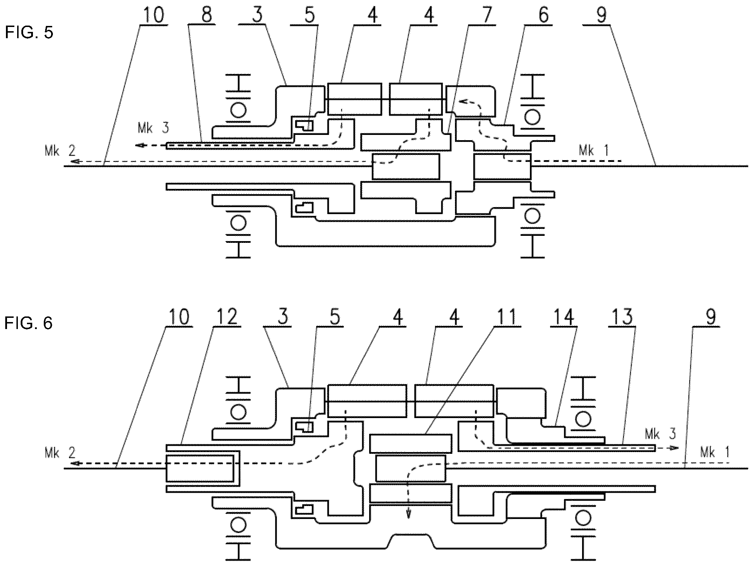

Figure 6 shows an inter-axle differential 2 distributing an input torque Mk1 from the input shaft 9 into a first output torque Mk2 directed to a first output carrier 12 of the first output shaft 10 (e. g. connected to the axle differential of the first front or second rear axle) and a second output torque Mk3 directed to a second output carrier 13 of the second output shaft arranged in line with the input shaft 9 so as to surround it (e. g. connected to the axle differential of the second front or first rear axle). The output torques Mk2 and Mk3 are directed to opposite sides. The input torque Mk1 is transmitted from the input shaft 9 to the carrier 1 via the geared portion of the input shaft 9 and the inner spur gearing of the carrier 1, and then to the housing 3 via the geared surfaces of the outer spur gearing of the carrier 1 and the geared surfaces of the connecting bridges of the housing 3. Thus, together with the input shaft 9, the carrier 1 and the housing 3 rotate about the axis of the input shaft, on which six pins with rotatable planet gear 4 with spur gearing (i.e., six planet gears) are mounted. The pins may be moulded into the housing 3. From the planet gears 4, which rotate as a unit together with the housing 3 and which may each rotate separately about the axis of its pin, the input torque Mk1 is split into two output torques Mk2 and Mk3 via the spur gearing of the planet gears 4 and the geared portions of the first output shaft 10 and the second output shaft, e. g. the first output carrier 12 of the first output shaft 10 and the second output carrier 13 of the second output shaft. A differential lock 5 may be arranged between the first output carrier 12 of the first output shaft 10 and the housing 3 to prevent its function, i.e., transmission of variable speed to the output shafts. The housing 3 itself may be supported by a support 14.

For comparison, Figure 5 shows an inter-axle differential 1 distributing the input torque Mk1 from the input shaft 9 to the first output torque Mk2 directed to the sun gear 7 with a first output carrier of the first output shaft 10 (e. g. connected to the axle differential of the first front or second rear axle) and a second output torque Mk3 directed to the second output carrier 8 of the second output shaft arranged in line with the first output shaft 10 so as to surround it (e. g. connected to the axle differential of the second front or first rear axle). The output torques Mk2 and Mk3 are directed to the same side. The input torque Mk1 is transmitted from the input shaft 9 to the carrier 6 via the geared portion of the input shaft 9 and the inner spur gearing of the carrier 6, and then to the housing 3 via the outer spur gearing of the carrier 6 and the inner spur gearing of the cylindrical housing 3. Thus, together with the input shaft 9, the carrier 6 and the housing 3 are rotatable about the axis of this shaft, on which housing 3 the six pins with rotatable planet gears 4 with spur gearing (i.e. six planet gears) are mounted. From the planet gears 4, which rotate as a unit together with the housing 3 and which can each rotate separately about the axis of its pin, the input torque Mk1 is divided into two output torques Mk2 and Mk3 via the spur gearing of the planet gears 4 and the geared portions of the first output shaft 10 and the second output shaft, e. g. a sun gear 7 having a first output carrier of the first output shaft 10 and a second output carrier 8 of the second output shaft. A differential lock 5 may be arranged between the second output carrier 8 of the second output shaft and the housing 3 to prevent its function, i. e. the transmission of variable speed to the output shafts.

### Example 2

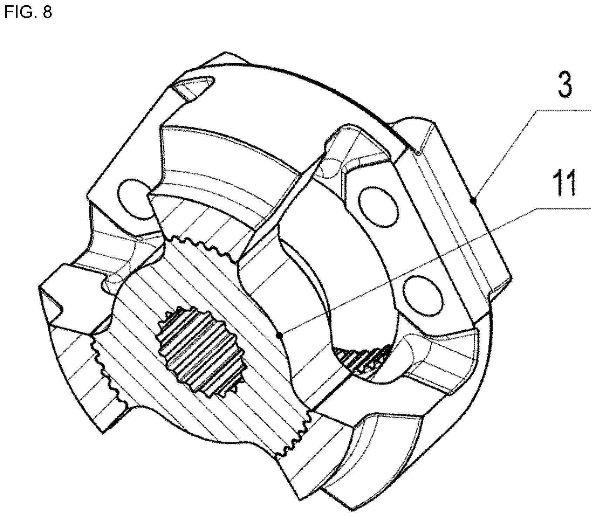

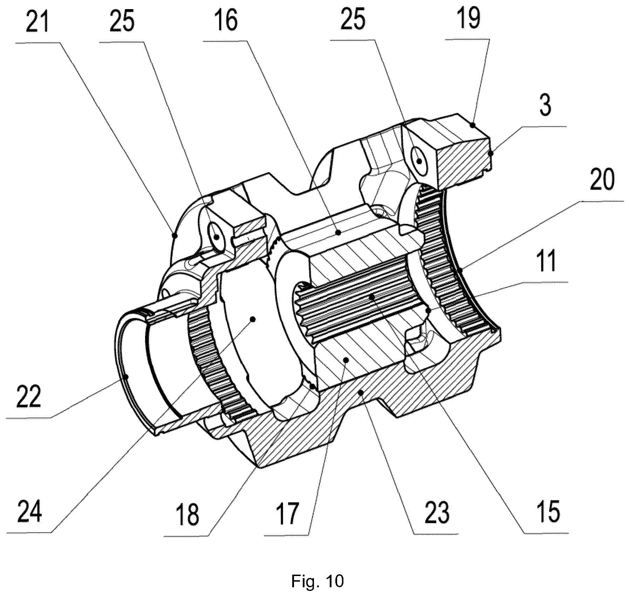

Figures 8 and 10 show a mutual arrangement of a carrier 11 and a housing 3. The carrier 11 is ring-shaped, comprises an inner circumference and an outer circumference, and along the inner circumference, it comprises an inner spur gearing 15 for engaging a geared portion of an input shaft 9. Along the outer circumference, it comprises three non-geared surfaces 16 spaced apart and three radially extending arms 17 with geared surfaces 18 of an outer spur gearing, for fixedly engaging the housing 3, and spaced apart such that a radially extending arm 17 with the geared surface 18 is arranged between each two non-geared surfaces 16. The housing 3 is cylindrically-shaped, and comprises a first base 19 with an opening 20 for the input shaft and a second output shaft, a second base 21 with an opening 22 for a first output shaft, and three connecting bridges 23 connecting the two bases 19, 21 to create three clearances 24 between the two bases 19, 21, for engaging pins in holes 25 in the two bases 19, 21, and planet gears 4 pivotally arranged on the pins for engaging a geared portion of the first or second output shaft. Each connecting bridge 23 comprises a geared surface on the side facing a longitudinal axis of the cylindrical shape for fixedly engaging with the geared surface 18 of the outer spur gearing of the carrier 11.

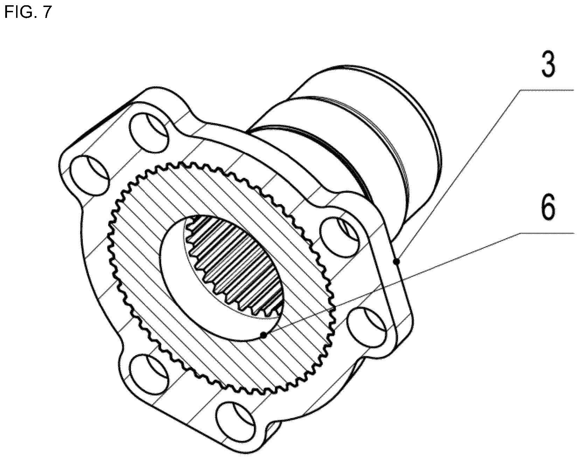

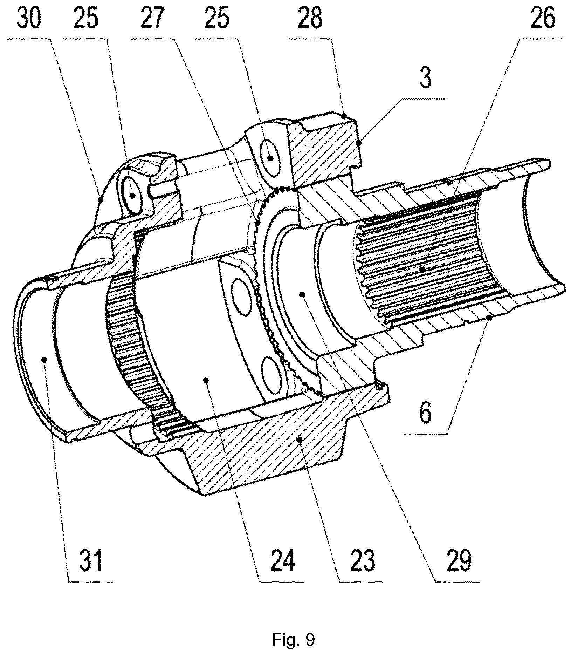

By comparison, Figures 7 and 9 show a mutual arrangement of a carrier 6 and a housing 3. The carrier 6 is ring-shaped, comprises an inner circumference and an outer circumference, and along the inner circumference, it comprises an inner spur gearing 15 for engaging a geared portion of an input shaft 9. Along the outer circumference, it comprises an outer spur gearing 27 for fixedly engaging the housing 3. The housing 3 is cylindrically shaped, and comprises a first base 28 with an opening 29 for the input shaft 9, a second base 30 with an opening 31 for the first output shaft 10, and a second output carrier 8 for the second output shaft (not shown in Fig. 7, 9), and between the two bases 28, 30 a clearance 24 for engaging pins in holes 25 in the two bases 19, 21, and planet gears 4 pivotally arranged on the pins for engaging a geared portion of the first output shaft 10 or second output shaft, in particular with a sun gear 7 of the first output carrier of the first output shaft 10 and with the second output carrier 8 of the second output shaft.

### Industrial applicability

The above-described carrier, housing and inter-axle differential can be used in a 6X6 chassis (two front and one rear axle, or one front and two rear axles) and in an 8X8 chassis (two front and two rear axles).

### List of reference signs

- 1: inter-axle differential according to the prior art
- 2: inter-axle differential according to the present invention
- 3: inter-axle differential housing
- 4: planet gear
- 5: differential lock
- 6: carrier according to the prior art
- 7: sun gear of the first output shaft 10 according to the prior art
- 8: second output carrier of the second output shaft according to the prior art
- 9: input shaft
- 10: first output shaft
- 11: inter-axle differential carrier according to the present invention
- 12: first output carrier of the first output shaft 110 according to the present invention
- 13: second output carrier of the second output shaft according to the present invention
- 14: housing support
- 15: inner spur gearing of the carrier 11
- 16: non-geared surface of the carrier 11
- 17: arm of the carrier 11
- 18: geared surface of the carrier 11
- 19: first base of the housing 3
- 20: opening of the first base 19
- 21: second base of the housing 3
- 22: opening of the second base 21
- 23: connecting bridge of the housing 3
- 24: clearance
- 25: pin opening
- 26: inner spur gearing of the carrier 6
- 27: outer spur gearing of the carrier 6
- 28: first base of the housing 3 according to the prior art
- 29: opening of the first base 28
- 30: second base of the housing 3 according to the prior art
- 31: opening of the second base 30
- Mk1: input torque
- Mk2: first output torque
- Mk3: second output torque

## Claims

1. A carrier (11) for a housing (3) of an inter-axle differential (2), wherein the carrier (11) is ring-shaped, comprises an inner circumference and an outer circumference, wherein along the inner circumference, the carrier (11) comprises an inner spur gearing (15) for engaging a geared portion of the input shaft (9), **characterised in that** along the outer circumference, the carrier (11) comprises three non-geared surfaces (16) spaced apart and three geared surfaces (18) of an outer spur gearing for fixedly engaging a housing (3), the three geared surfaces (18) being spaced apart such that a geared surface (18) is arranged between each of the two non-geared surfaces (16).

2. The carrier (11) according to claim 1, **characterised in that** each geared surface (18) of the outer spur gearing is arranged on a radially extending arm (17).

3. A housing (3) of an inter-axle differential (2) for the carrier (11) according to any one of claims 1 to 2, **characterised in that** it is cylindrically-shaped, comprises: a first base (19) having an opening (20) for the input shaft and a second output shaft; a second base (21) having an opening for a first output shaft; and three connecting bridges (23) linking the two bases (19, 21) to form three clearances (24) between the two bases (19, 21) for holding pins and planet gears (4) arranged thereon for engaging a geared portion of the two output shafts, wherein each connecting bridge (23) comprises a geared surface on the side facing a longitudinal axis of the cylindrical shape for fixed connection with the geared surface (18) of the outer spur gearing of the carrier (11).

4. An inter-axle differential (2), comprising the carrier (11) according to any one of claims 1 to 2 and the housing (3) according to claim 3, **characterised in that** the carrier (11) is suitable for engaging the geared portion of the input shaft (9) and the housing (3) is fixedly connected to the carrier (11); wherein the inter-axle differential (2) further comprises six pins mounted on the housing (3), wherein one planet gear (4) is arranged on each pin for engaging the geared portion of the first or second output shaft such that three planet gears (4) are in engagement with the geared portion of the first output shaft (10) and the remaining three planet gears (4) are in engagement with the geared portion of the second output shaft extending in the opposite direction from the first output shaft (10).
